## Europäisches Patentamt
## European Patent Office
## Office européen des brevets

(19)

(11) Veröffentlichungsnummer: **0 309 991**
**B1**

(12) **EUROPÄISCHE PATENTSCHRIFT**

(45) Veröffentlichungstag der Patentschrift:
**18.07.90**

(21) Anmeldenummer: **88115885.1**

(22) Anmeldetag: **27.09.88**

(51) Int. Cl.⁵: **B62D 55/205**, B62D 55/215,
B62D 55/20

(54) Gummilager für Bolzen von Gleisketten und Raupenketten von Fahrzeugen.

(30) Priorität: 28.09.87 DE 3732586

(43) Veröffentlichungstag der Anmeldung:
05.04.89 Patentblatt 89/14

(45) Bekanntmachung des Hinweises auf die Patenterteilung:
18.07.90 Patentblatt 90/29

(84) Benannte Vertragsstaaten:
AT CH FR GB IT LI NL SE

(56) Entgegenhaltungen:
AT-B- 372 345
DE-A- 3 033 086

(73) Patentinhaber: DIEHL GMBH & CO., Stephanstrasse 49,
D-8500 Nürnberg(DE)

(72) Erfinder: Heess, Manfred, Barmer Strasse 5,
D-5630 Remscheid 11(DE)
Erfinder: von Freymann, Joachim, Kierweg 4,
D-5400 Koblenz(DE)
Erfinder: Lipuscek, Günter, Greifswalderstrasse 3,
D-5400 Koblenz(DE)

## Beschreibung

Die Erfindung bezieht sich auf ein Gummilager für Bolzen von Gleisketten und Raupenketten von Fahrzeugen nach dem Oberbegriff des Anspruches 1.

Aus der US-PS 22 34 927 ist es bekannt, daß die Geometrie der auf den Bolzen aufvulkanisierten Ringe eine Reckteckform haben. Die Umlaufkanten sind zum Zwecke des leichteren Einpressens in die Kettenkörperbohrung mit Radien versehen. Die Gummilager füllen nach ihrem Einpressen in die Bohrung eines Kettenkörpers den freien Raum zwischen Bohrung und Bolzen nur etwa zu 94% aus. Der nicht ausgefüllte Raum entsteht aufgrund der gewölbten Stirnflächen der Gummiringe. Damit liegt zwischen den Gummiringen ein ringförmiger Luftspalt mit etwa dreieckförmigen Querschnitt zwischen Gummiring und Rohrkörperbohrung sowie Gummiring und Bolzenumfangvor. Durch die Vorspannung der eingepreßten Gummiringe und durch die Betriebsbelastung entstehen Spannungsspitzen in den gewölbten Stirnflächen der verformten Gummiringe. Diese führen dort zu Anrissen und damit zur Schädigung der Gummilagerung.

Der Erfindung liegt die Aufgabe zugrunde, eine Form für Gummiringe vorzuschlagen, durch die die Spannungsspitzen an den Stirnflächen der verformten Gummiringe vermindert werden, die einen nahezu hundertprozentigen Füllgrad der Kettenkörperbohrung ermöglicht und durch die die Kontaktfläche zwischen Gummi und Metall vergrößert wird.

Die Erfindung löst diese Aufgabe entsprechend den kennzeichnenden Merkmalen des Anspruches 1.

Eine vorteilhafte Weiterbildung der Erfindung geht aus dem Unteranspruch hervor.

Mit der Erfindung wird erreicht, daß der etwa dreieckförmige Luftspalt weitgehend vermieden wird. An den nahezu planparallelen Stirnflächen der eingepreßten Ringe liegt ein wesentlich vermindertes Spannungsniveau vor, so daß es nicht zu Anrissen der Stirnflächen der Gummiringe kommt, und die Gefahr von Anrissen in der Ubergangszone von Gummiring zum Bolzen verringert wird.

Die erfindungsgemäße Ringform hat auch den Vorteil, daß der mit den Gummiringen durch Vulkanisation verbundene Bolzen leichter aus der Vulkanisaionsform zu entnehmen ist.

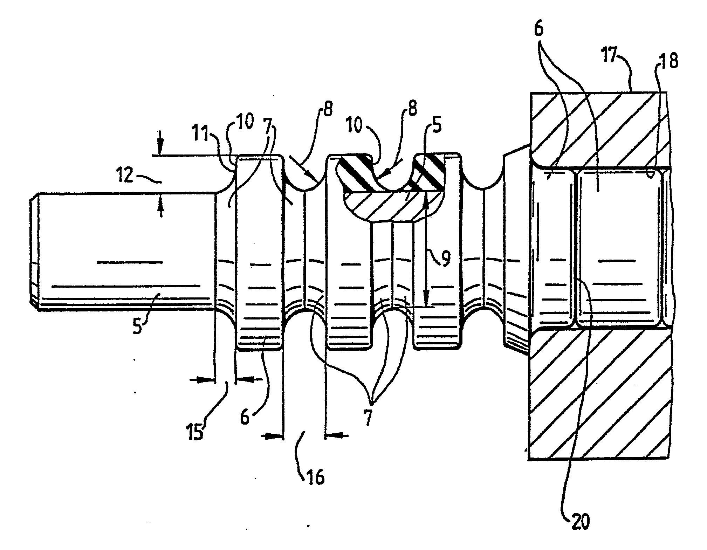

Ein Ausführungsbeispiel der Erfindung ist nachstehend anhand der Zeichnung beschrieben.

Ein Bolzen 5 aus Stahl ist mit Gummiringen 6 durch Vulkanisation verbunden. Die Gummiringe 6 weisen jeweils stirnseitig einen Bund 7 auf. Der Bund 7 ist durch den Radius 8 und den Innendurchmesser 9 begrenzt. Der tangentiale Übergang des Radius 8 in eine Stirnfläche 10 ist mit 11 bezeichnet. Dieser Übergang 11 liegt etwa bei der halben Dicke 12 des Gummiringes 6. Die Länge 15 des Bundes 7 entspricht dem halben Abstand 16 zwischen den Stirnflächen 10 der Gummiringe 6 im nicht eingepreßten Zustand. Die in einen Kettenkörper 17 eingepreßten Gummiringe 6 liegen mit nahezu planen Stirnflächen 20 nahe nebeneinander. Der Füllungsgrad der Bohrung 18 des Kettenkörpers 17 ist daher nahezu 100%.

Erprobungsergebnisse zeigten, daß das beschriebene Gummilager für Bolzen eine Standzeit aufweist, die über der Standzeit des bekannten Gummilagers nach dem Stand der Technik liegt.

## Patentansprüche

1. Gummilager für Bolzen (5) von Gleisketten und Raupenketten von Fahrzeugen, bestehend aus zylindrischen Gummiringen (6) mit etwa rechteckigen Querschnitten, deren Außendurchmesser größer ist als der Bohrungsdurchmesser der Kettenkörper (17), auf die Bolzen vulkanisiert sind und deren Umlaufkanten mit Radien versehen sind, dadurch gekennzeichnet, daß die Gummiringe (6) jeweils stirnseitig einen Bund (7) aufweisen, dessen Außenform einen Radius (8) aufweist, der tangential in die Stirnfläche (10) des Bundes (7) mündet, dessen Innenform axial zum Innendurchmesser (9) des Gummiringes (6) ist, und dessen Länge (15) dem halben Abstand (16) zweier Gummiringe (6) im nicht eingepreßten Zustand entspricht.

2. Gummilager nach Anspruch 1, dadurch gekennzeichnet, daß der tangentiale Übergang (11) etwa in halber Dicke (12) des Querschnittes des Gummiringes (6) liegt.

## Claims

1. A rubber bearing for pins of caterpillar tracks and crawler tracks of vehicles, consisting of cylindrical rubber rings having approximately rectangular crosssections, the outside diameter of which is larger than the bore diameter of the chain bodies onto which the pins are vulcanised and the encircling edges of which are provided with radii, characterised in that the rubber rings (6) in each case have frontally a collar (7), the outer shape of which has a radius (8) which opens tangentially into the end plane (10) of the collar (7), the inner shape of which is axial to the inside diameter (9) of the rubber ring (6), and the length (15) of which corresponds to half the spacing (16) of two rubber rings (6) in the non-pressed-in state.

2. A rubber bearing according to claim 1, characterised in that the tangential transition (11) lies approximately at half the thickness (12) of the crosssection of the rubber ring (6).

## Revendications

1. Coussinet en caoutchouc pour des chenilles de véhicules, constitué par des anneaux de caoutchouc cylindriques de section transversale sensiblement rectangulaire, dont le diamètre extérieur est plus grand que le diamètre des alésages des patins de chenille, lesquels anneaux sont vulcanisés sur les tourillons et ont en section transversale un profil comportant des arcs de cercle, caractérisé en ce que chaque face frontale des anneaux de caoutchouc (6) comporte un collet (7) dont l'extérieur a la forme d'un arc de cercle (8) qui se raccorde tangentiellement à la surface frontale (10) du collet (7), dont l'intérieur est un cylindre coaxial à l'axe de l'anneau de caoutchouc (6) et dont la longueur (15) correspond à la moitié de la distance (16) entre deux anneaux de caoutchouc ajacents (6) à l'état non comprimé.

2. Coussinet en caoutchouc selon la revendication 1, caractérisé en ce que le raccordement tangentiel (11) se trouve sensiblement à mi-épaisseur (12) de la section transversale de l'anneau de caoutchouc (6).